# EUROPEAN PATENT APPLICATION

(11) **EP 4 306 333 A1**
(43) Date of publication of application: **17.01.2024**
(21) Application number: 22198374.5
(22) Date of filing: 28.09.2022
(51) Int. Cl.: B60B 5/02, B60B 3/10, B60B 21/06, B60B 3/04

(54) **MULTI-PIECE WHEEL RIM AND METHOD OF FASTENING COMPONENTS THEREOF TOGETHER**

(30) Priority: 14.07.2022 TW 111126471
(71) Applicant: Advanced International Multitech Co., Ltd., Kaohsiung City 81260 (TW)
(72) Inventor: HSIAO, Te-Fu, 80457 Kaohsiung City (TW); KUO, Che-Hao, 81260 Kaohsiung City (TW); CHANG, Chung-Hsin, 81260 Kaohsiung City (TW); WANG, Chia-Hsin, 81260 Kaohsiung City (TW); LIU, Erh-Wei, 81260 Kaohsiung City (TW)
(74) Representative: Murgitroyd & Company

(57) **Abstract**

A multi-piece wheel rim includes a first component (2) made of carbon fiber and having a plurality of slots (21); dissimilar material members (3) made of a material other than carbon fiber and respectively fixed into the slots (21), each dissimilar member (3) having plasticity and a tapped hole (31); threaded bushings (4) engaging respectively and threadedly the tapped holes (31) of the dissimilar material members (3); a second component (6); and headed screws (5) extending through the second component (6) and respectively engaging threadedly the threaded bushings (4), thereby fastening the second component (6) to the first component (2). A method is hereby disclosed for fastening together components of the multi-piece wheel rim.

## Description

The disclosure relates to a wheel rim, and more particularly to a multi-piece wheel rim and a method of fastening components thereof together.

Due to the continuous development of material technology, the wheel rim to be mainly made of metal in the past has begun to be made from carbon fiber and other composite materials to achieve the advantages of light weight and sufficient strength. However, in general, a wheel rim made from carbon fiber is assembled in a multi-piece manner. In common design, a plurality of wheel spokes are assembled to a wheel flange. The carbon fiber material cannot be directly threadedly fastened. Otherwise, due to the characteristic of the carbon fiber material, a tapped hole of a carbon fiber component is apt to crack and be damaged. Therefore, in a current method of making a multi-piece wheel rim, a tubular metal member is first buried in a carbon fiber component during forming the carbon fiber component. After the carbon fiber component is formed, the tubular metal member is machined to form a thread. In this way, a screw can be screwed into the tubular metal member and is avoided from biting the carbon fiber material. Nevertheless, in the aforesaid method, the tubular metal member is easily misaligned during the forming process of the carbon fiber component, thereby reducing the yield rate. Further, direct contact of the metal material with the carbon fiber material may cause potential corrosion.

Therefore, one object of the disclosure is to provide a multi-piece wheel rim that can alleviate at least one of the drawbacks of the prior art.

According to the object, a multi-piece wheel rim includes a first component made of carbon fiber and having a plurality of slots; a plurality of dissimilar material members made of a material other than carbon fiber and respectively fixed into the slots, each of the dissimilar members having plasticity and a tapped hole; a plurality of threaded bushings engaging respectively and threadedly the tapped holes of the dissimilar material members; a second component; and a plurality of headed screws extending through the second component and respectively engaging threadedly the threaded bushings, thereby fastening the second component to the first component.

Another object of the disclosure is to provide a method of fastening together components of a multi-piece wheel rim.

Accordingly, a method of the disclosure includes
forming a plurality of slots in a first component made of carbon fiber, and fixing a plurality of dissimilar material members respectively into the slots, each of the dissimilar members having plasticity;
forming each of the dissimilar members with a tapped hole; and
engaging a plurality of threaded bushings respectively and threadedly into the tapped holes of the dissimilar material members, inserting a plurality of headed screws through a second component, and engaging the headed screws respectively and threadedly with the threaded bushings so that the second component is fastened to the first component.

Other features and advantages of the disclosure will become apparent in the following detailed description of the embodiment with reference to the accompanying drawings, of which:
Figure 1 is a flow chart illustrating a method of fastening together components of a multi-piece wheel rim according to an embodiment of the disclosure;
Figure 2 is a schematic fragmentary sectional view illustrating a dissimilar material member fixed into a first component of the multi-piece wheel of the embodiment;
Figure 3 is a schematic fragmentary sectional view illustrating a headed screw, a threaded bushing, the dissimilar material member, and the first component of the embodiment; and
Figure 4 is a schematic fragmentary sectional side view illustrating a second component fastened to the first component by the headed screw, the threaded bushing, and the dissimilar material member.

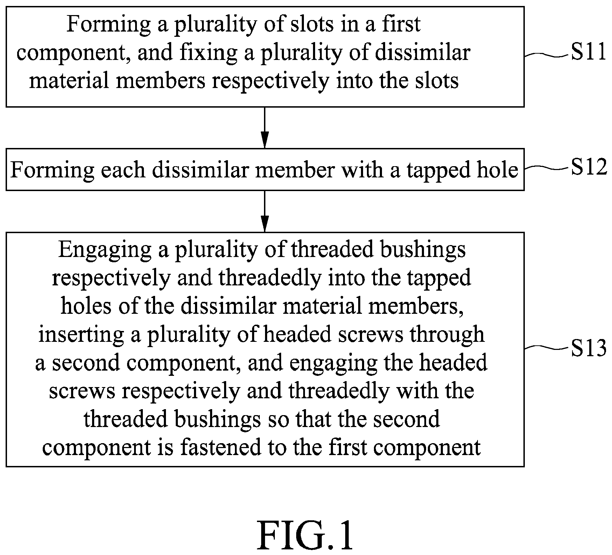

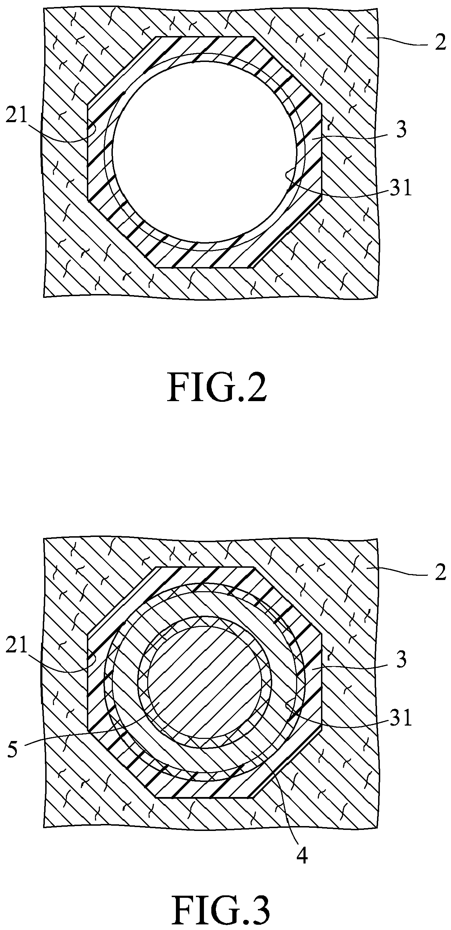

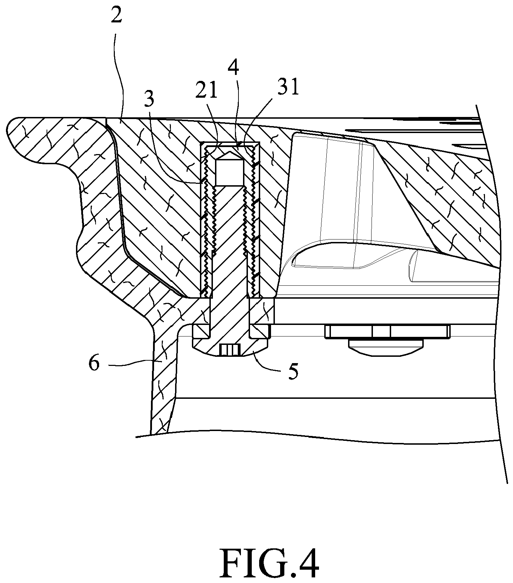

Figures 1 to 4 illustrate a multi-piece wheel rim and a method of fastening together components of the multi-piece wheel rim according to an embodiment of the disclosure. The multi-piece wheel rim includes a first component 2 made of carbon fiber, a plurality of dissimilar material members 3 each made of a material other than carbon fiber, a plurality of threaded bushings 4, a second component 6, and a plurality of headed screws 5.

To fasten together the components of the multi-piece wheel rim, the method includes step 11, step 12, and step 13. In step 11, the first component 2 is first formed with a plurality of slots 21. Each slot 21 is in the form of a polygonal blind hole. The dissimilar material members 3 are subsequently and respectively fixed into the slots 21. Each dissimilar material member 3 has plasticity and is made from a non-metallic material. Specifically, each dissimilar material member 3 is made of a heat insulating material, such as mono cast nylon (MC) or polyoxymethylene (POM). Each dissimilar material member 3 has a polygonal cross section in conformity with a respective one of the slots 21.

In step 12, each dissimilar member 3 is formed with a tapped hole 31.

As shown in Figures 1, 3, and 4, in step 13, the threaded bushings 4 are prepared, and each threaded bushing 4 has an internal thread and an external thread. The external threads of the threaded bushings 4 engage respectively and threadedly with the tapped holes 31 of the dissimilar material members 3. The headed screws 5 are inserted through a second component 6, and engage respectively and threadedly with the internal threads of the threaded bushings 4 so that the second component 6 is fastened to the first component 2.

In general, bonding the carbon fiber and the metal together induces low bonding strength and potential corrosion. Therefore, in a conventional method of fastening together components of a multi-piece wheel rim, the metal component is in advance buried in the carbon fiber component. However, the metal component tends to be misaligned during forming the carbon fiber component. Further, during fastening, the metal component and the carbon fiber component are easily caused by the excessive torque force to be rotated relative to and loosened from each other.

In contrast, regarding this disclosure, because each dissimilar material member 3 is disposed between a respective one of the threaded bushings 4 and the first component 2, the threaded bushings 4 made of metal are prevented from directly contacting the first component 2 made of carbon fiber so as to avoid potential corrosion problems. Further, since the slots 21 and the dissimilar material members 3 are formed and assembled after the formation of the first component 2, the misalignment between components during a forming process is prevented in comparison with that of prior art. Furthermore, since each dissimilar material member 3 has the polygonal cross section in conformity with the polygonal shape of the respective slot 21, relative rotation between each dissimilar material member 3 and the respective slot 21 is effectively prevented, so that engagement of each dissimilar material member 3 and the respective slot 21 can be subjected to a high torque force without being loosened. As the dissimilar material members 3 are each made of the heat insulating material, the headed screws 5 are prevented from being repeatedly heated so that the fastening force of each headed screw 5 is prevented from being decreased. Noteworthily, but not limited hereto, the multi-piece wheel rim of the disclosure can be a two-piece wheel rim or a three-piece wheel rim, and the first component 2 and the second component 6 can be any part of the multi-piece wheel frame, such as a spoke, a disc surface, a frame body, an inner frame body and an outer frame body, etc.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A multi-piece wheel rim, **characterized by**:
a first component (2) made of carbon fiber and having a plurality of slots (21);
a plurality of dissimilar material members (3) each made of a material other than carbon fiber and respectively fixed into said slots (21), each of said dissimilar members (3) having plasticity and a tapped hole (31);
a plurality of threaded bushings (4) engaging respectively and threadedly said tapped holes (31) of said dissimilar material members (3);
a second component (6); and
a plurality of headed screws (5) inserted through said second component (6) and engaging respectively and threadedly said threaded bushings (4), thereby fastening said second component (6) to said first component (2).

2. The multi-piece wheel rim as claimed in Claim 1, **characterized in that** each of said slots (21) is a polygonal hole.

3. The multi-piece wheel rim as claimed in Claims 1 or 2, **characterized in that** each of said dissimilar material members (3) is made from a non-metallic material.

4. The multi-piece wheel rim as claimed in Claim 1 to 3, further **characterized in that** each of said dissimilar material members (3) is made of a heat insulating material.

5. A method of fastening together components of a multi-piece wheel rim, **characterized by**:
forming a plurality of slots (21) in a first component (2) made of carbon fiber, and fixing a plurality of dissimilar material members (3) respectively into the slots (21), each of the dissimilar members (3) having plasticity;
forming each of the dissimilar members (3) with a tapped hole (31); and
engaging a plurality of threaded bushings (4) respectively and threadedly into the tapped holes (31) of the dissimilar material members (3), inserting a plurality of headed screws (5) through a second component (6), and engaging the headed screws (5) respectively and threadedly with the threaded bushings (4) so that the second component (6) is fastened to the first component (2).

6. The method claimed as in Claim 5, **characterized in that** each of the slots (21) is a polygonal hole, and each of the dissimilar material members (3) has a polygonal cross section in conformity with a respective one of the slots (21).

7. The method as claimed in Claims 5 or 6, **characterized in that** each of the dissimilar material members (3) is made from a non-metallic material other than carbon fiber.

8. The method as claimed in Claim 7, further **characterized in that** each of the dissimilar material members (3) is made of a heat insulating material.

9. The method as claimed in Claim 7, further **characterized in that** each of the dissimilar material members (3) is made of mono cast nylon or polyoxymethylene.
